# EUROPÄISCHE PATENTANMELDUNG

(11) **EP 3 213 903 A1**
(43) Veröffentlichungstag der Anmeldung: **06.09.2017**
(21) Anmeldenummer: 16158525.2
(22) Anmeldetag: 03.03.2016
(51) Int. Cl.: B29C 51/14

(54) **VERFAHREN ZUR HERSTELLUNG EINES BAUTEILS AUS EINEM FASERVERSTÄRKTEN KUNSTSTOFF MIT EINER FUNKTIONSOBERFLÄCHE ODER EINER DEKORATIVEN OBERFLÄCHE**

(71) Anmelder: BASF SE, 67056 Ludwigshafen am Rhein (DE)
(72) Erfinder: NIXDORF, Andreas, 68159 Mannheim (DE); ZEIHER, Susanne, 67071 Ludwigshafen (DE); JAKOBI, Reinhard, 67133 Maxdorf (DE)
(74) Vertreter: Kudla, Karsten

(57) **Zusammenfassung**

Die Erfindung betrifft ein Verfahren zur Herstellung eines Bauteils aus einem faserverstärkten Kunststoff mit einer Funktionsoberfläche oder einer dekorativen Oberfläche, umfassend folgende Schritte:
(a) Einlegen einer ersten Lage mit der Funktionsoberfläche oder der dekorativen Oberfläche in ein Formwerkzeug,
(b) Erwärmen eines Halbzeugs aus einem faserverstärkten thermoplastischen Polymermaterial auf eine Temperatur oberhalb der Schmelztemperatur des thermoplastischen Polymers,
(c) Einlegen des erwärmten Halbzeugs in das Formwerkzeug,
(d) Schließen des Formwerkzeugs, wobei das erwärmte Halbzeug gegen die Lage mit der Funktionsoberfläche oder der dekorativen Oberfläche gepresst wird,
(e) Abkühlen des Bauteils im Formwerkzeug auf eine Temperatur unterhalb der Schmelztemperatur des thermoplastischen Polymers und
(f) Entnehmen des Bauteils aus dem Formwerkzeug.

## Beschreibung

Die Erfindung betrifft ein Verfahren zur Herstellung eines Bauteils aus einem faserverstärkten Kunststoff mit einer Funktionsoberfläche oder einer dekorativen Oberfläche. Hierzu wird eine Lage mit einer Funktionsoberfläche oder dekorativen Oberfläche mit einem Halbzeug aus einem thermoplastischen Polymermaterial verbunden, so dass die Lage mit der Funktionsoberfläche oder der dekorativen Oberfläche die äußere sichtbare Oberfläche des Bauteils bildet.

Bauteile aus einem faserverstärkten Polymermaterial mit einer Funktionsoberfläche oder dekorativen Oberfläche finden vielfältige Einsatzmöglichkeiten. Derartige Bauteile werden zum Beispiel im Innenraum von Kraftfahrzeugen als Instrumententräger oder auch Innenverkleidungen eingesetzt.

Insbesondere für den Einsatz in Kraftfahrzeugen haben Bauteile aus einem faserverstärkten Polymermaterial mit einer Funktionsoberfläche oder einer dekorativen Oberfläche den Vorteil, dass diese im Vergleich zu Laminaten mit einer Metallschicht eine geringere Masse haben. Hierdurch lässt sich in einem Kraftfahrzeug aufgrund der möglichen niedrigeren Masse der Kraftstoffverbrauch senken.

Ein Bauteil mit einer Gewebeschicht, die mit einem faserverstärkten Polymer verbunden ist, ist zum Beispiel in DE-A 10 2012 208 914 beschrieben. Hierbei ist das Bauteil ein Sitz, wie er in Fahrzeugen für den öffentlichen Personentransport, zum Beispiel in Schienenfahrzeugen eingesetzt werden kann. Die Gewebeschicht bildet dabei die sichtbare Oberfläche. Zur Herstellung des Sitzes wird zunächst eine Gewebelage in eine Form eingelegt und mit einem zu einem Duroplast härtbaren Reaktionsgemisch umgossen, wobei die Gewebelage in das Reaktionsgemisch eingebettet wird. Dies wird gegebenenfalls einmal oder mehrfach wiederholt. Als letztes wird eine farblich gestaltete Gewebelage eingebettet, die die sichtbare Oberfläche des Sitzes bildet.

Ein Verfahren zur Herstellung eines Bauteils mit einer Oberflächenbeschichtung ist in DE-A 10 2012 021869 beschrieben. Um die Oberflächenbeschichtung auftragen zu können, wird eine flexible Matte in ein Formwerkzeug eingelegt und auf die Matte ein Faserhalbzeug aus Verstärkungsfasern. Anschließend wird eine fließfähige Polymermasse in das Formwerkzeug eingefüllt. Nach einer teilweisen Aushärtung der fließfähigen Polymermasse wird eine Kunststoffformmasse in die Hohlräume des Formwerkzeugs eingefüllt, die vollflächig an der flexiblen Matte anliegt und so eine Oberflächenbeschichtung bildet. Gleichzeitig verbindet sich die Kunststoffformmasse auch mit der Polymermasse, mit der das Faserhalbzeug getränkt wurde. Hierdurch wird eine stabile Verbindung erzielt.

Bei den aus dem Stand der Technik bekannten Verfahren wird jeweils eine Matte oder ein Gewebe in ein Formwerkzeug eingelegt und anschließend mit einer flüssigen Kunststoffmasse umgossen. Dies hat den Nachteil, dass durch das Einfüllen der Kunststoffmasse die Matte oder das Gewebe verschoben werden kann, was zu einer unerwünschten Verschlechterung der Oberflächenstruktur führen kann. Des Weiteren handelt es sich bei den eingesetzten Polymeren in der Regel um Duroplaste, was zu einer verlängerten Zykluszeit führt.

Aufgabe der vorliegenden Erfindung war es daher, ein Verfahren bereit zu stellen, mit dem ein Bauteil aus einem faserverstärkten Polymermaterial hergestellt werden kann, das mit einer Funktionsoberfläche oder einer dekorativen Oberfläche ausgestattet ist und das sich auch großtechnisch ohne mögliche Fehlteile durch Verschieben der die Funktionsoberfläche oder dekorative Oberfläche bildenden Lage herstellen lässt.

Diese Aufgabe wird gelöst durch ein Verfahren zur Herstellung eines Bauteils aus einem faserverstärkten Kunststoff mit einer Funktionsoberfläche oder einer dekorativen Oberfläche, umfassend folgende Schritte:
(a) Einlegen einer ersten Lage mit der Funktionsoberfläche oder der dekorativen Oberfläche in ein Formwerkzeug,
(b) Erwärmen eines Halbzeugs aus einem faserverstärkten thermoplastischen Polymermaterial auf eine Temperatur oberhalb der Schmelztemperatur des thermoplastischen Polymers,
(c) Einlegen des erwärmten Halbzeugs in das Formwerkzeug,
(d) Schließen des Formwerkzeugs, wobei das erwärmte Halbzeug gegen die Lage mit der Funktionsoberfläche oder der dekorativen Oberfläche gepresst wird,
(e) Abkühlen des Bauteils im Formwerkzeug auf eine Temperatur unterhalb der Schmelztemperatur des thermoplastischen Polymers und
(f) Entnehmen des Bauteils aus dem Formwerkzeug.

Durch das Einlegen der Lage mit der Funktionsoberfläche oder der dekorativen Oberfläche in das Formwerkzeug und das anschließende Einlegen eines auf oberhalb der Schmelztemperatur erwärmten Halbzeugs aus einem faserverstärkten thermoplastischen Polymermaterial wird verhindert, dass die Lage mit der Funktionsoberfläche oder der dekorativen Oberfläche im Werkzeug verschoben werden kann, wenn das erwärmte Halbzeug eingelegt wird. Durch die Erwärmung auf eine Temperatur oberhalb der Schmelztemperatur ist das Polymermaterial des faserverstärkten Halbzeugs schmelzeflüssig und verbindet sich so mit der Lage mit Funktionsoberfläche oder dekorativer Oberfläche, wodurch eine gute Haftung erhalten wird, so dass sich die Lage mit Funktionsoberfläche oder dekorativer Oberfläche nicht mehr von dem Halbzeug lösen kann.

Unter Schmelztemperatur wird im Rahmen der vorliegenden Erfindung die Temperatur verstanden, bei der das Polymermaterial vom festen Aggregatzustand in einen flüssigen oder erweichten Zustand übergeht. Bei teilkristallinen Polymeren ist die Schmelztemperatur die Temperatur, bei der die kristalline Phase in den flüssigen Zustand übergeht.

Das Schmelzverhalten eines kristallinen oder teilkristallinen Polymers ist eine strukturempfindliche Eigenschaft. Bei Polymeren gibt es gewöhnlich keinen scharfen Schmelzpunkt, wie er bei niedermolekularen Stoffen beobachtet wird. Stattdessen wird beim Erhitzen ein Schmelztemperaturbereich von der ersten Veränderung der Form der festen Teilchen bis zur Umwandlung in eine hochviskose oder viskoelastische Flüssigkeit beobachtet, der vom Verschwinden der kristallinen Phase begleitet wird. Der Schmelzbereich hängt von einer Anzahl Parametern ab, wie molare Masse, molare Massenverteilung, Masse- bzw. Volumenanteil des/r kristallinen Materials/Phase und thermodynamische Eigenschaften. Er kann auch von der thermischen Vorgeschichte der Probekörper abhängen. Das endotherme Peakmaximum des Schmelzbereiches nach DIN EN ISO 3146:2002-06 mit der Berichtigung vom Mai 2003 wird auch im Rahmen der vorliegenden Erfindung als Schmelztemperatur bezeichnet.

In einer Ausführungsform der Erfindung wird nach dem Schließen des Formwerkzeugs in Schritt (d) und vor dem Abkühlen in Schritt (e) auf einer der Lage mit der Funktionsoberfläche oder der dekorativen Oberfläche abgewandten Seite eine Kunststoffmasse in das Formwerkzeug eingespritzt. Durch das Einspritzen auf der der Lage mit der Funktionsoberfläche oder der dekorativen Oberfläche abgewandten Seite wird die Funktionsoberfläche oder die dekorative Oberfläche nicht negativ beeinträchtigt sondern behält ihre Oberflächeneigenschaften. Die zusätzlich eingespritzte Kunststoffmasse kann zum Beispiel zur Verstärkung des Bauteils genutzt werden. Hierzu ist es zum Beispiel möglich, die Kunststoffmasse über die gesamte Fläche des Bauteils auf der der Funktionsoberfläche oder dekorativen Oberfläche abgewandten Seite einzuspritzen. Hierdurch wird eine Vergrößerung der Wanddicke des Bauteils erzielt. Alternativ und bevorzugt ist es jedoch, wenn durch das Einspritzen der Kunststoffmasse Funktionselemente an das Halbzeug angespritzt werden. Derartige Funktionselemente sind zum Beispiel Rippen zur Verstärkung oder auch Befestigungselemente wie Clipse oder Gewinde. Weiterhin ist es auch möglich, alternativ oder zusätzlich nach dem Schließen des Formwerkzeugs am Rand des Bauteils eine Kunststoffmasse in das Formwerkzeug einzuspritzen, die auch die Lage mit der Funktionsoberfläche oder der dekorativen Oberfläche am Rand teilweise überdeckt.

Als Kunststoffmasse, die in das Formwerkzeug eingespritzt wird, eignet sich jede Kunststoffmasse, die sich mit dem Kunststoff des Halbzeugs verbindet. Besonders bevorzugt enthält die Kunststoffmasse, die in das Formwerkzeug eingespritzt wird, ein thermoplastisches Polymer. Durch den Einsatz eines thermoplastischen Polymers ist es möglich, dass die thermoplastische Kunststoffmasse des Halbzeugs und die in das Formwerkzeug eingespritzte Kunststoffmasse miteinander verschweißen und so eine formstabile und unlösbare, stoffschlüssige Verbindung zwischen der Kunststoffmasse des Halbzeugs und der eingespritzten Kunststoffmasse erhalten wird. Besonders bevorzugt ist es dabei, wenn die in das Formwerkzeug eingespritzte Kunststoffmasse das gleiche thermoplastische Polymer enthält wie das Halbzeug.

Als thermoplastisches Polymer des Halbzeugs eignet sich jedes, dem Fachmann bekannte thermoplastische Polymer. Bevorzugt weist das Polymer eine Schmelztemperatur auf, die niedriger ist als die Zersetzungstemperatur der Lage mit Funktionsoberfläche oder dekorativer Oberfläche, um zu verhindern, dass beim Einlegen des Halbzeugs in das Formwerkzeug die Lage mit Funktionsoberfläche oder dekorativer Oberfläche geschädigt wird. Wenn das thermoplastische Polymer eine Schmelztemperatur aufweist, die höher ist als die Zersetzungstemperatur der Lage mit der Funktionsoberfläche oder dekorativen Oberfläche, wird vorzugsweise eine Werkzeugtemperatur eingestellt, die niedriger als die Zersetzungstemperatur ist. Weiterhin wird die Werkzeugtemperatur in diesem Fall so eingestellt, dass das eingespritzte thermoplastische Polymer so schnell auf eine Temperatur unterhalb der Zersetzungstemperatur abkühlt, dass das Material der Lage mit Funktionsoberfläche oder dekorativer Oberfläche nicht geschädigt wird.

Bevorzugt ist das thermoplastische Polymer des Halbzeugs ausgewählt aus Polyolefinen, Polycarbonaten, Polyestern, Polyethern, thermoplastischen Polyurethanen, Vinyl-Polymeren, Polyamiden, Polyacrylaten, Polyacetaten oder Mischungen oder Copolymeren daraus.

Im Allgemeinen eingesetzte Polyolefine sind zum Beispiel Polyethylen, Polypropylen, Polybuten-1, Polytetrafluorethylen. Als Polyamide eignen sich zum Beispiel Polyamid 6, Polyamid 11, Polyamid 6/6, Polyamid 6/10 oder Polyamid 6/12. Geeignete Polyester sind beispielsweise Polyethylenterephthalat, Polybutylenterephthalat oder Polycarbonat. Üblicherweise eingesetzte Polyacrylate sind beispielsweise Poly(meth)acrylsäureester, Polymethacrylat oder Polyacrylnitril. Als Polyacetal wird beispielsweise Polyoxymethylen eingesetzt. Geeignete Polymere, die Monomereinheiten mit Vinyl-Gruppen enthalten, sind zum Beispiel Polyvinylchlorid, Polyvinylidenchlorid, Polystyrol, Polyvinylcarbazol, Polyvinylacetat oder Polyvinylalkohol. Weitere geeignete Thermoplaste sind Polyethersulfon, Polyetherimid, Acrylbutadienstyrol, Styrolacrylnitril und Acrylester-Styrol-Acrylnitril. Weiterhin können auch Mischungen der vorstehend genannten Polymere oder Copolymerisate aus den zur Bildung der vorstehend genannten Homopolymeren eingesetzten Monomereinheiten eingesetzt werden.

Besonders bevorzugt sind Polyamide und thermoplastische Polyurethane.

Die eingesetzten Polymermassen können auch weitere Zusatzstoffe enthalten. Dies sind zum Beispiel übliche Weichmacher, Schlagzähmodifizierer, Flammschutzmittel und weitere, dem Fachmann bekannte Additive, die üblicherweise Polymeren zugesetzt werden.

Wie vorstehend beschrieben ist die Kunststoffmasse, die in das Formwerkzeug eingespritzt wird, vorzugsweise die gleiche, die auch das Halbzeug enthält. Wenn die Kunststoffmasse, die in das Formwerkzeug eingespritzt wird eine andere ist als die, die das Halbzeug enthält, werden dennoch auch die vorstehend beschriebenen thermoplastischen Polymere bevorzugt, die auch die weiteren Zusatzstoffe enthalten können.

Insbesondere wenn mit der in das Formwerkzeug eingespritzten Kunststoffmasse verstärkende Funktionselemente hergestellt werden sollen, zum Beispiel Rippen zur Verstärkung des Bauteils, ist es bevorzugt, wenn die in das Formwerkzeug eingespritzte Kunststoffmasse verstärkt ist. Es ist jedoch auch dann möglich, eine verstärkte Kunststoffmasse einzusetzen, wenn die eingespritzte Kunststoffmasse nicht zur Herstellung von verstärkenden Funktionselementen eingesetzt wird.

Zur Verstärkung der Kunststoffmasse können alle dem Fachmann bekannten zur Verstärkung geeigneten Zusatzstoffe eingesetzt werden. Derartige zur Verstärkung geeigneten Zusatzstoffe sind zum Beispiel Kurzfasern oder Langfasern oder auch Pulver oder flächige oder kugelförmige Füllstoffe. Als Kurzfasern oder Langfasern werden insbesondere Glasfasern, Kohlenstofffasern, Naturfasern, Mineralfasern, zum Beispiel Basaltfasern, Aramidfasern oder auch Polymerfasern eingesetzt. Bei Einsatz von Polymerfasern ist darauf zu achten, dass insbesondere bei Verwendung thermoplastischer Fasern die Schmelztemperatur des Kunststoffs der thermoplastischen Faser höher ist als die Schmelztemperatur des Kunststoffs, der in das Formwerkzeug eingespritzt wird, um zu verhindern, dass die Fasern durch das Einspritzen der Kunststoffmasse geschädigt werden.

Als Kurzfasern werden hierbei Fasern mit einer Länge im Bereich von 0,1 bis 1 mm bezeichnet und als Langfasern Fasern mit einer Länge im Bereich von 1 bis 50 mm.

Als Pulver oder flächiger oder kugelförmiger Füllstoff, der zur Verstärkung eingesetzt wird, eignet sich zum Beispiel Talkum.

Neben den vorstehend genannten können jedoch auch alle weiteren, dem Fachmann bekannten Verstärkungsstoffe eingesetzt werden, die für eine Verarbeitung der Kunststoffmasse im Spritzgussverfahren geeignet sind.

Die Lage mit Funktionsoberfläche oder dekorativer Oberfläche ist vorzugsweise eine Folie, ein Non-woven, beispielsweise ein Vlies, ein Textil, zum Beispiel ein Gewebe, Gestrick oder Gewirk, Lederfaser, Kunstleder, ein flächiges Naturprodukt oder ein folienartiger Schichtverbund. Besonders bevorzugt ist die Lage mit Funktionsoberfläche oder dekorativer Oberfläche ein folienartiger Schichtverbund.

Der folienartige Schichtverbund ist dabei vorzugsweise aufgebaut aus einer Kunststoff- oder Metallfolie, gegebenenfalls einer Verbindungsschicht und einer Polyurethanschicht, die Kapillaren aufweist, die über die gesamte Dicke der Polyurethanschicht gehen.

Die Kunststoff- oder Metallfolie, im Folgenden Folie, ist ein Flächengebilde aus Metall oder einem natürlichen oder vorzugsweise synthetischen Polymer, das eine Dicke im Bereich von 0,5 µm bis 1 mm, vorzugsweise 1 µm bis 0,5 mm und insbesondere bis 0,15 mm aufweist.

Die Folie ist vorzugsweise manuell biegbar, das heißt ohne Zuhilfenahme eines Werkzeugs.

Unter Metallen sind Silber, Gold, Zinn und insbesondere Aluminium bevorzugt.

Unter Kunststoffen sind Polyolefine wie Polyethylen und Polypropylen, weiterhin Polyester, Polyamid, Polycarbonat, Polyvinylchlorid, Polymethylmethacrylat und Polystyrol bevorzugt, wobei unter Polyolefinen wie Polyethylen und Polypropylen nicht nur die betreffenden Ethylen- und Propylenhomopolymere, sondern auch Copolymere mit anderen Olefinen wie beispielsweise Acrylsäure oder 1-Olefinen zu verstehen sind. So sind unter Polyethylen insbesondere Ethylencopolymere mit 0,1 bis unter 50 Gew.-% eines oder mehrerer 1-Olefine wie Propylen, 1-Buten, 1-Penten, 1-Hexen, 1-Octen, 1-Decen oder 1-Dodecen zu verstehen, wobei Propylen, 1-Buten und 1-Hexen bevorzugt sind. Unter Polypropylen sind insbesondere auch Propylencopolymere mit 0,1 bis unter 50 Gew.-% Ethylen und/oder eines oder mehrerer 1-Olefine wie 1-Buten, 1-Penten, 1-Hexen, 1-Octen, 1-Decen oder 1-Dodecen zu verstehen, wobei Ethylen, 1-Buten und 1-Hexen bevorzugt sind. Unter Polypropylen ist dabei bevorzugt im Wesentlichen isotaktisches Polypropylen zu verstehen.

Folien aus Polyethylen können aus HDPE oder LDPE oder LLDPE hergestellt werden.

Unter Folien aus Polyamid sind solche bevorzugt, die sich von Polyamid 6 ableiten.

Unter Folien aus Polyester sind solche aus Polybutylenterephthalat und insbesondere aus Polyethylenterephthalat (PET) bevorzugt.

Unter Folien aus Polycarbonaten sind solche bevorzugt, die sich von Polycarbonaten ableiten, die unter Verwendung von Bisphenol A hergestellt sind.

Unter Folien aus Polyvinylchlorid sind solche aus Hart-Polyvinylchlorid oder Weich-Polyvinylchlorid zu verstehen, wobei Weich-Polyvinylchlorid auch Copolymere des Vinylchlorids mit Vinylacetat und/oder Acrylaten umfasst.

Kunststofffolien im Sinne der vorliegenden Erfindung können auch Verbundfolien umfassen, beispielsweise Folien, die eine der vorstehend genannten Folien und eine Metallfolie oder Papier umfassen.

Die Polyurethanschicht, die Kapillaren aufweist, die über die gesamte Dicke der Polyurethanschicht gehen, weist vorzugsweise eine mittlere Dicke im Bereich von 15 bis 300 µm, bevorzugt von 20 bis 150 µm, besonders bevorzugt von 25 bis 80 µm auf.

In einer Ausführungsform weist die Polyurethanschicht im Mittel mindestens 100, bevorzugt mindestens 250 Kapillaren pro 100 cm² auf. Die Kapillaren weisen vorzugsweise einen mittleren Durchmesser im Bereich von 0,005 bis 0,05 mm, bevorzugt 0,009 bis 0,03 mm auf. Des Weiteren sind die Kapillaren in einer Ausführungsform gleichmäßig über die Polyurethanschicht verteilt. In einer bevorzugten Ausführungsform sind die Kapillaren jedoch ungleichmäßig über die Polyurethanschicht verteilt. Die Kapillaren in der Polyurethanschicht können einen gebogenen oder einen geradlinigen Verlauf aufweisen. Auch eine Kombination aus geradlinig verlaufenden und gebogenen Kapillaren ist möglich.

Die Kapillaren verleihen der Polyurethanschicht eine Luft- und Wasserdampfdurchlässigkeit, ohne dass eine Perforierung erforderlich wäre. In einer Ausführungsform kann die Wasserdampfdurchlässigkeit der Polyurethanschicht über 1,5 mg/cm²·h liegen, gemessen nach DIN EN ISO 14268:2013-03. So ist es möglich, dass Feuchtigkeit durch die Polyurethanschicht hindurch migrieren kann.

In einer Ausführungsform weist die Polyurethanschicht zusätzlich zu den Kapillaren noch Poren auf, die nicht über die gesamte Dicke der Polyurethanschicht gehen.

In einer bevorzugten Ausführungsform weist die Lage mit der Funktionsoberfläche eine strukturierte Oberfläche auf. Diese kann über spezielle Matrizen in der Produktionsanlage erzeugt werden. Als Matrize wird vorzugsweise ein Verbund aus Aluminiumträger und durch einen Laser strukturierten Silikonschichten, welche dem Endprodukt die Optik und Haptik geben, eingesetzt.

Hierzu ist es zum Beispiel möglich, dass die Polyurethanschicht eine Musterung aufweist. Die Musterung kann beliebig sein und beispielsweise die Musterung eines Leders oder einer Holzoberfläche wiedergeben. In einer Ausführungsform der vorliegenden Erfindung kann die Musterung ein Nubukleder wiedergeben.

In einer alternativen Ausführungsform weist die Polyurethanschicht eine samtartige Erscheinung auf.

In einer weiteren Ausführungsform kann die Musterung einer Samtoberfläche entsprechen, beispielsweise mit Härchen mit einer mittleren Länge von 20 bis 500 µm, bevorzugt 30 bis 200 µm und besonders bevorzugt 120 bis 150 µm. Die Härchen können beispielsweise einen kreisförmigen Durchmesser aufweisen. In einer besonderen Ausführungsform haben die Härchen eine kegelförmige Form.

Wenn die Polyurethanschicht Härchen aufweist, so sind diese vorzugsweise in einem mittleren Abstand von 50 bis 350, bevorzugt 100 bis 250 µm zueinander angeordnet.

Für den Fall, dass die Polyurethanschicht Härchen aufweist, beziehen sich die Angaben über die mittlere Dicke auf die Polyurethanschicht ohne die Härchen.

Die Polyurethanschicht ist mit der Folie vorzugsweise über mindestens eine Verbindungsschicht verbunden.

Bei der Verbindungsschicht kann es sich um eine durchbrochene, das heißt nicht vollflächig, ausgeprägte Schicht handeln, vorzugsweise eines gehärteten organischen Klebstoffs.

In einer Ausführungsform der vorliegenden Erfindung handelt es sich bei der Verbindungsschicht um eine punktförmig, streifenförmig oder gitterförmig, beispielsweise in Form von Rauten, Rechtecken, Quadraten oder einer Bienenwabenstruktur aufgebrachte Schicht. Dann kommt die Polyurethanschicht mit der Folie an den Lücken der Verbindungsschicht in Berührung.

In einer anderen Ausführungsform handelt es sich bei Verbindungsschicht um eine vollflächig ausgebildete Schicht.

In einer Ausführungsform handelt es sich bei der Verbindungsschicht um eine Schicht eines gehärteten organischen Klebstoffs, beispielsweise auf Basis von Polyvinylacetat, Polyacrylat oder insbesondere Polyurethan, vorzugsweise von Polyurethanen mit einer Glastemperatur unter 0°C.

Dabei kann die Härtung des organischen Klebstoffs beispielsweise thermisch, durch aktinische Strahlung oder durch Altern erfolgt sein.

In einer anderen Ausführungsform handelt es sich bei der Verbindungsschicht um ein Klebenetz.

In einer Ausführungsform weist die Verbindungsschicht eine maximale Dicke von 100 µm, bevorzugt 50 µm, besonders bevorzugt 30 µm, ganz besonders bevorzugt 15 µm auf.

In einer weiteren Ausführungsform kann die Verbindungsschicht Mikrohohlkugeln enthalten. Unter Mikrohohlkugeln sind im Rahmen der vorliegenden Erfindung kugelförmige Partikel mit einem mittleren Durchmesser im Bereich von 5 bis 20 µm aus polymerem Material, insbesondere aus halogeniertem Polymer wie beispielsweise Polyvinylchlorid oder Polyvinylidenchlorid oder Copolymer von Vinylchlorid mit Vinylidenchlorid, zu verstehen. Mikrohohlkugeln können leer sein oder vorzugsweise gefüllt mit einer Substanz, deren Siedepunkt geringfügig tiefer liegt als die Zimmertemperatur, beispielsweise mit n-Butan und insbesondere mit Isobutan.

In einer Ausführungsform kann die Polyurethanschicht mit der Folie über mindestens zwei Verbindungsschichten verbunden sein, die eine gleiche oder unterschiedliche Zusammensetzung aufweisen. So kann die eine Verbindungsschicht ein Pigment enthalten und die andere Verbindungsschicht pigmentfrei sein.

In einer Variante kann die eine Verbindungsschicht Mikrohohlkugeln enthalten und die andere Verbindungsschicht nicht.

In einer Ausführungsform kann der folienartige Schichtverbund keine weiteren Schichten aufweisen. In einer anderen Ausführungsform umfasst der folienartige Schichtverbund mindestens eine Zwischenschicht, die zwischen der Folie und der Verbindungsschicht, zwischen der Verbindungsschicht und der Polyurethanschicht oder zwischen zwei Verbindungsschichten, die gleich oder verschieden sein können, liegt. Dabei wird die Zwischenschicht gewählt aus Textil, Papier, Vliesstoffen, und Vliesstoffen (Non-wovens) aus synthetischen Materialien wie Polypropylen oder Polyurethan, insbesondere Vliesstoffen aus thermoplastischem Polyurethan.

In den Ausführungsformen, in denen erfindungsgemäß der folienartige Schichtverbund mindestens eine Zwischenschicht aufweist, kommt die Polyurethanschicht vorzugsweise nicht direkt mit der Folie in Berührung, sondern mit der Zwischenschicht.

Die Zwischenschicht weist vorzugsweise eine Dicke im Bereich von 0,05 mm bis 5 cm, bevorzugt 0,1 mm bis 0,5 cm, besonders bevorzugt 0,2 mm bis 2 mm auf.

Vorzugsweise weist die Zwischenschicht eine Wasserdampfdurchlässigkeit von mehr als 1,5 mg/cm²·h auf, gemessen nach DIN EN ISO 14268:2013-03.

Der folienartige Schichtverbund weist im Allgemeinen eine hohe mechanische Festigkeit auf und erfüllt hohe anwendungsspezifische Anforderungen an das Endprodukt hinsichtlich Abriebfestigkeiten, Knicktests, Farbstabilität nach Heißlichtlagerung usw. Weiterhin kann der folienartige Schichtverbund eine hohe Wasserdampf- und Luftdurchlässigkeit aufweisen. Tropfen von verschütteter Flüssigkeit können leicht entfernt werden, beispielsweise mit einem Lappen. Außerdem weist der folienartige Schichtverbund ein gefälliges Aussehen und einen sehr angenehmen weichen Griff auf.

Wenn die Lage mit Funktionsoberfläche ein Gewebe oder Gestrick ist, so kann dieses aus beliebigen Fasern, beispielsweise synthetischen Fasern oder Naturfasern hergestellt sein. Ein typisches Gewebe ist zum Beispiel ein beliebiger Stoff. Zur Herstellung des Stoffes können beispielsweise Wollfäden, Baumwollfäden, Leinenfäden oder Fäden aus synthetischen Fasern verwendet werden. Als Gestrick kann ein gestrickter Stoff eingesetzt werden, wobei hier zur Herstellung Fäden aus den gleichen Materialien wie für das Gewebe eingesetzt werden können.

Als flächiges Naturprodukt kann insbesondere Leder verwendet werden.

In einer Ausführungsform weist die Lage mit Funktionsoberfläche oder dekorativer Oberfläche zusätzlich eine Lage aus einem geschäumten Polymer als Trägermaterial auf.

Die Faserverstärkung des faserverstärkten Halbzeugs umfasst vorzugsweise mindestens eine Lage eines Gewebes, eines Vlieses, eines Gestricks, eines Gewirks oder parallel ausgerichtete Endlosfasern in mehreren gegebenenfalls zueinander gedrehten Lagen oder mehrere Lagen aus unterschiedlichen Strukturen.

Wenn die Faserverstärkung ein Gewebe ist, so kann jede dem Fachmann bekannte Gewebeart eingesetzt werden. Wenn parallel ausgerichtete Endlosfasern in mehreren zueinander gedrehten Lagen eingesetzt werden, so können die einzelnen Lagen in jedem beliebigen Winkel zueinander gedreht angeordnet sein. Bevorzugt ist es, wenn der Winkel, in dem die einzelnen Lagen zueinander gedreht angeordnet sind, im Bereich von 45 bis 90° liegt, wobei zum Beispiel bei zwei Lagen ein Winkel von 90°, bei drei Lagen ein Winkel von 60° und bei vier Lagen ein Winkel von 45° bevorzugt ist. So ist es zum Beispiel bei vier Lagen möglich, diese so zu positionieren, dass die erste und die zweite Lage in einem Winkel von 90° zueinander gedreht sind, die zweite und die dritte Lage in einem Winkel von 45° und die dritte und vierte Lage wieder in einem Winkel von 90°. Bei Draufsicht auf den Lagenaufbau kann dann jeweils zwischen zwei Lagen ein Winkel von 45° gemessen werden.

Das faserverstärkte Halbzeug, das nach Erwärmung auf eine Temperatur oberhalb der Schmelztemperatur in das Formwerkzeug eingelegt wird, ist vorzugsweise ein endlosfaserverstärktes thermoplastisches Halbzeug oder eine Platte, die auf die Umfangsform des herzustellenden Bauteils zugeschnitten ist. Hierdurch lässt sich das Halbzeug auf einfache Weise an die Form des Bauteils durch Einlegen in das Formwerkzeug und Schließen des Formwerkzeugs anpassen, ohne dass das Polymermaterial des Halbzeugs innerhalb des Formwerkzeugs in nennenswertem Umfang fließt und dadurch gegebenenfalls die Lage mit Funktionsoberfläche oder dekorativer Oberfläche schädigt.

Ein Umspritzen des Bauteilrandes ist möglich. Dabei kann es am Bauteilrand zu leichten Faserverschiebungen kommen, diese haben allerdings keinen Einfluss auf die späteren Bauteileigenschaften.

## Patentansprüche

1. Verfahren zur Herstellung eines Bauteils aus einem faserverstärkten Kunststoff mit einer Funktionsoberfläche oder einer dekorativen Oberfläche, umfassend folgende Schritte:
(a) Einlegen einer ersten Lage mit der Funktionsoberfläche oder der dekorativen Oberfläche in ein Formwerkzeug,
(b) Erwärmen eines Halbzeugs aus einem faserverstärkten thermoplastischen Polymermaterial auf eine Temperatur oberhalb der Schmelztemperatur des thermoplastischen Polymers,
(c) Einlegen des erwärmten Halbzeugs in das Formwerkzeug,
(d) Schließen des Formwerkzeugs, wobei das erwärmte Halbzeug gegen die Lage mit der Funktionsoberfläche oder der dekorativen Oberfläche gepresst wird,
(e) Abkühlen des Bauteils im Formwerkzeug auf eine Temperatur unterhalb der Schmelztemperatur des thermoplastischen Polymers und
(f) Entnehmen des Bauteils aus dem Formwerkzeug.

2. Verfahren gemäß Anspruch 1, **dadurch gekennzeichnet, dass** nach dem Schließen des Formwerkzeugs auf einer der Lage mit der Funktionsoberfläche oder der dekorativen Oberfläche abgewandten Seite eine Kunststoffmasse in das Formwerkzeug eingespritzt wird.

3. Verfahren gemäß Anspruch 1 oder 2, **dadurch gekennzeichnet, dass** nach dem Schließen des Formwerkzeugs am Rand des Bauteils eine Kunststoffmasse in das Formwerkzeug eingespritzt wird, die auch die Lage mit der Funktionsoberfläche oder der dekorativen Oberfläche am Rand teilweise überdeckt.

4. Verfahren gemäß Anspruch 2, **dadurch gekennzeichnet, dass** durch das Einspritzen der Kunststoffmasse Funktionselemente an das Halbzeug angespritzt werden.

5. Verfahren gemäß einem der Ansprüche 2 bis 4, **dadurch gekennzeichnet, dass** die Kunststoffmasse ein thermoplastisches Polymer enthält.

6. Verfahren gemäß einem der Ansprüche 1 bis 5, **dadurch gekennzeichnet, dass** das thermoplastische Polymer des Halbzeugs ausgewählt ist aus Polyolefinen, Polycarbonaten, Polyestern, Polyethern, Polyurethanen, Vinyl-Polymeren, Polyamiden, Polyacrylaten, Polyacetaten oder Mischungen oder Copolymeren daraus.

7. Verfahren gemäß einem der Ansprüche 2 bis 6, **dadurch gekennzeichnet, dass** die in das Formwerkzeug eingespritzte Kunststoffmasse das gleiche thermoplastische Polymer enthält wie das Halbzeug.

8. Verfahren gemäß einem der Ansprüche 2 bis 7, **dadurch gekennzeichnet, dass** die in das Formwerkzeug eingespritzte Kunststoffmasse verstärkt ist.

9. Verfahren gemäß einem der Ansprüche 1 bis 8, **dadurch gekennzeichnet, dass** die Lage mit Funktionsoberfläche oder dekorativer Oberfläche eine Folie, ein Vlies, ein Gewebe, ein Gestrick, ein flächiges Naturprodukt oder ein folienartiger Schichtverbund ist.

10. Verfahren gemäß Anspruch 9, **dadurch gekennzeichnet, dass** der folienartige Schichtverbund aufgebaut ist aus einer Kunststoff- oder Metallfolie, gegebenenfalls einer Verbindungsschicht und einer Polyurethanschicht, die Kapillaren aufweist, die über die gesamte Dicke der Polyurethanschicht gehen.

11. Verfahren gemäß einem der Ansprüche 1 bis 10, **dadurch gekennzeichnet, dass** die Lage mit der Funktionsoberfläche eine strukturierte Oberfläche aufweist.

12. Verfahren gemäß einem der Ansprüche 1 bis 11, **dadurch gekennzeichnet, dass** das faserverstärkte Halbzeug als Faserverstärkung mindestens eine Lage eines Gewebes, eines Vlieses, eines Gestricks, eines Gewirks oder parallel ausgerichtete Endlosfasern in mehreren zueinander gedrehten Lagen oder mehrere Lagen aus unterschiedlichen Strukturen enthält.

13. Verfahren gemäß einem der Ansprüche 1 bis 12, **dadurch gekennzeichnet, dass** das faserverstärkte Halbzeug eine Platte ist, die auf die Umfangsform des herzustellenden Bauteils zugeschnitten ist.
